# FASCICULE DE BREVET EUROPEEN

(11) **EP 2 540 530 B1**
(45) Date de publication et mention de la délivrance du brevet: **29.11.2017**
(21) Numéro de dépôt: 12173291.1
(22) Date de dépôt: 22.06.2012
(51) Int. Cl.: B62B 3/02, B62B 5/00, B60D 1/14, B60D 1/36, B60D 1/48, B60D 1/26, B60D 1/00

(54) **Train de convoyage**
Lastzug
Trailer train

(30) Priorité: 27.06.2011 FR 1155709; 30.09.2011 FR 1158884; 02.04.2012 FR 1253022
(43) Date de publication de la demande: 02.01.2013
(73) Titulaire: COUTIER INDUSTRIE, 57970 Basse Ham (FR)
(72) Inventeur: Coutier, Charles, 57570 CATTENOM (FR)
(74) Mandataire: Lavialle, Bruno François Stéphane

(56) Documents cités:
- EP-A1- 1 743 828
- WO-A2-2009/036750
- BE-A- 682 106
- FR-A1- 2 843 563

## Description

La présente invention concerne un ensemble de manutention de pièces au moyen de bases roulantes.

### ARRIERE PLAN DE L'INVENTION

La manutention de pièces dans les ateliers de montage, s'opère au moyen de trains de bases roulantes sur le plateau desquelles les diverses pièces sont présentes. La base demeure en général le support unique pour ces pièces et donc est destiné à stationner à proximité du poste de montage auquel les pièces sont destinées. Le convoyage de ces bases roulantes se fait par train qui circule d'un poste à l'autre pour délivrer les bases roulantes ou les reprendre en charge. Chaque base est manoeuvrée à la main depuis le train jusqu'au poste proprement dit et inversement et depuis le train jusqu'au poste de chargement proche d'un magasin général et inversement. Certaines de ces bases sont équipées de moyens d'attelage connus en eux-mêmes pour constituer un train de bases directement attelées les unes aux autres. L'insertion de ce type de bases dans des chariots de transport permet de simplifier le plan de distribution des bases à chaque poste. En effet, pour éviter les attelages et dételages trop nombreux, il faut, dans le cas d'un train de bases sans chariots, prévoir l'ordre dans lequel les bases sont délivrées le long du trajet parcouru par le train. Il faut ensuite prévoir un deuxième parcours pour reprendre les bases vides. Dans le cas d'un train de chariots, chaque base est dételée sans nuire à la continuité du train et chaque base pleine dételée peut être immédiatement remplacée par une base vide à évacuer ou inversement si le circuit logistique consiste à récupérer des bases transportant des conditionnements remplis sur les postes.

Les trains de manutention présentent également l'avantage d'être isotrace c'est-à-dire que chaque chariot passe exactement sur la trace au sol du chariot qui le précède. Ceci est en général assuré par le jeu d'essieux pivotants qui sont reliés entre eux par un embiellage, les essieux étant porteurs des moyens d'attelage avant et arrière du chariot.

L'un des inconvénients de ces ensembles de manutention réside dans l'encombrement longitudinal d'un tel train.

Par ailleurs, un autre inconvénient rencontré dans ce type de matériel réside dans la difficulté de réaliser l'attelage d'une base à l'intérieur du chariot qui affecte la forme d'un arceau (ou portique) vertical. En effet, l'opérateur manie le chariot au moyen d'un timon relevé ou d'une main courante d'extrémité pour l'introduire dans l'arceau puis ajuste la position relative de l'arceau et de la base, tant bien que mal, à l'étroit entre la base et le chariot, pour mettre en correspondance les moyens d'attelage de la base au chariot.

Le document WO 2009/036750 A2 décrit un ensemble de manutention selon le préambule de la revendication 1.

### OBJET DE L'INVENTION

La présente invention entend remédier à ces inconvénients et compléter les dispositions d'un ensemble de manutention par des moyens destinés à accroître la sécurité des opérateurs.

### PRESENTATION DE L'INVENTION

C'est ainsi que l'invention est relative à un ensemble de manutention selon la revendication 1. Cet arrangement de l'ensemble de manutention permet d'économiser l'achat et l'emploi d'un chariot pour une capacité de transport identique sans nuire de manière significative au caractère isotrace de ce transport. On sait en effet qu'une base ne dévie que de quelques centimètres de la trace du véhicule qui la précède, ce qui est tolérable lorsqu'elle est seule ou à la rigueur lorsqu'elles sont deux accouplées directement l'une à l'autre.

L'économie d'investissement qui résulte de l'invention est très importante, de même que la réduction des frais de maintenance et d'entretien du matériel.

Ainsi, le dernier chariot de la deuxième pluralité est équipé de moyens d'attelage d'une base identiques à ceux qu'il comporte pour coopérer avec le moyen d'attelage fixe susdit.

Avantageusement, ces moyens d'attelage complémentaires dudit moyen d'attelage fixe sont portés par l'extrémité d'un levier monté mobile dans le chariot entre deux positions distantes verticalement, dont une première position dans laquelle le moyen d'attelage fixe coopère avec le moyen d'attelage complémentaire pour l'attelage de la base au chariot et une seconde position de libération du moyen d'attelage fixe.

Dans une première variante de réalisation, la première position est la plus haute et la seconde la plus basse, le levier étant basculant et soumis à un organe de son rappel vers sa position haute. Il est de préférence pourvu d'un verrou de son maintien en position basse.

La position basse du levier présente l'avantage de permettre une rotation de la base dans le chariot avec passage partiel du plateau de cette dernière au dessus du levier (au niveau de la diagonale du plateau de la base). On peut par cela réduire l'encombrement longitudinal de chaque chariot pour une base donnée.

Dans une deuxième variante de réalisation, le levier est monté basculant dans le chariot entre une position haute de libération du moyen d'attelage fixe et une position basse dans laquelle le moyen d'attelage fixe coopère avec le moyen d'attelage complémentaire pour l'attelage de la base au chariot.

Le moyen d'attelage fixe peut-être un crochet à sphère d'attelage tandis que le moyen d'attelage complémentaire comporte un boîtier pour coiffer la sphère pardessus ou par-dessous ou peut-être un axe ou doigt vertical et le moyen d'attelage complémentaire, un anneau dans lequel se place le doigt selon le choix fait pour les positions actives et inactives du levier.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés dans lesquels :
- la figure 1 illustre schématiquement un ensemble de manutention selon l'invention
- Les figures 2a et 2b sont des schémas vus de dessus d'un chariot équipé d'une base roulante,
- les figures 3a et 3b sont des schémas vus de dessus d'une base roulante lors de sa rotation dans un chariot,
- la figue 4 illustre un levier basculant avec un organe de verrouillage,
- les figures 5 et 6 illustrent par des vues partielles les dispositions particulières de l'invention aux extrémités longitudinales de l'ensemble du chariot,
- la figure 7 est une vue générale en élévation d'un chariot selon l'invention,
- la figure 8 est une vue analogue à la figure 4 d'un train de chariots et bases roulantes conformes à l'invention,
- la figure 9 est une vue schématique en élévation d'une base roulante selon une variante de l'invention,
- la figure 10 est une vue analogue à la figure 6 d'une base roulante selon une autre variante de l'invention.

### DESCRIPTION DETAILLEE DE L'INVENTION

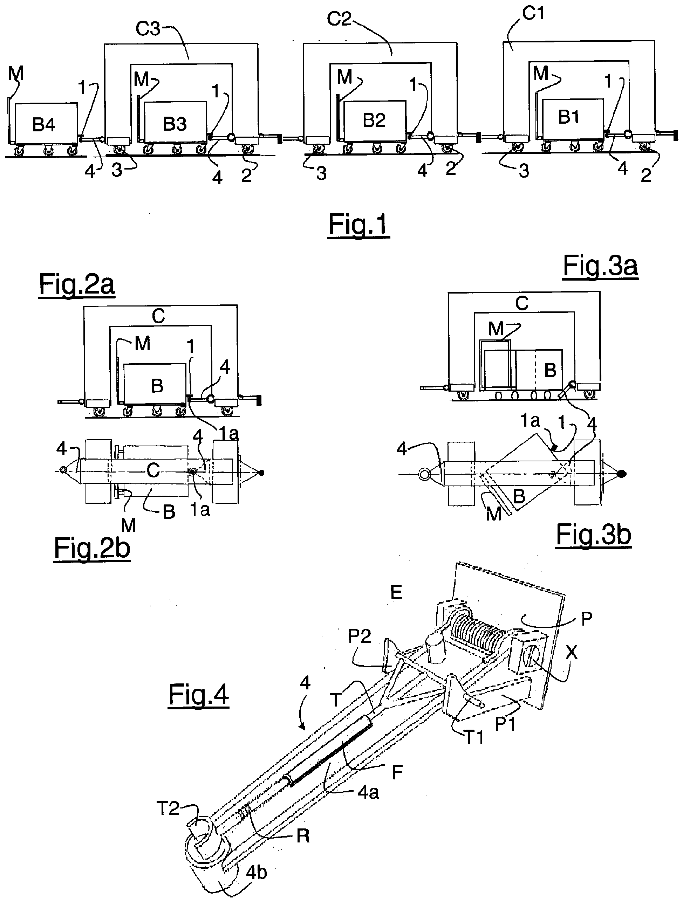

A la figure 1, on a représenté un ensemble de manutention comprenant une première pluralité de bases roulantes B1 à B4, chacune équipée d'un moyen d'attelage fixe 1 à l'une de ses extrémités et une deuxième pluralité de chariots C1, C2, C3. Chaque chariot est pourvu d'essieux avant 2 et arrière 3 pivotant et asservis l'un à l'autre pour ce qui concerne leur pivotement, entre lesquels essieux l'une des bases susdites peut être attelée au chariot par coopération dudit moyen d'attelage fixe 1 et d'un moyen d'attelage complémentaire 4 porté par le chariot.

Selon l'invention, la première pluralité de bases roulantes B1-B4 comporte au moins un élément de plus que la deuxième pluralité de chariots C1-C3, la base excédentaire B4 étant attelée à l'arrière du dernier chariot C3 de la deuxième pluralité.

Le dernier chariot de la pluralité de chariots C1-C3 est équipé, de manière fixe ou démontable, d'un moyen d'attelage de la dernière base B4 identique au moyen d'attelage complémentaire 4.

Aux figures 2a et 2b, les moyens d'attelage 1 et 4 d'une base dans un chariot sont en prise tandis qu'aux figures 3a et 3b, ces moyens sont dételés, ce qui permet une rotation de la base à l'intérieur du chariot. Cette rotation est permise, malgré une dimension longitudinale du chariot C réduite, un peu supérieure à la diagonale de la base B, parce que le mode de réalisation représenté prévoit un moyen d'attelage 4 en forme de levier qui s'abaisse. Le coin de la base passe alors au dessus de ce levier. Dans le cas de ces premières figures, le moyen d'attelage fixe 1 situé à l'extrémité d'une base B est simplement un doigt vertical la, tourné vers le bas, en saille de l'extrémité de la base, de manière à pouvoir pénétrer dans un anneau extrême du moyen 4 en forme de levier.

La figure 4 illustre un mode de réalisation de ce levier pourvu d'un verrou pour son maintien dans l'état abaissé. Ce levier comporte une platine P pour sa fixation à l'intérieur d'un chariot. Le levier proprement dit 4a comporte un anneau extrême 4b et est articulé, à l'opposé de l'anneau 4b, à la platine autour de l'axe X. Il peut donc pivoter verticalement autour de cet axe en étant soumis à un effort de rappel vers le haut grâce au ressort E.

Sur le levier, une tige T est montée coulissante dans un fourreau F et possède une traverse d'extrémité T1 sensiblement parallèle à l'axe X. A son autre extrémité, elle présente un berceau T2. Des crochets P1 et P2 sont solidaires de la platine P pour recevoir la traverse T1 de la tige T quand le levier 4a est abaissé.

A l'état libre, le levier 4a est remonté autour de l'axe X par le ressort E. Pour enclencher l'anneau 4b autour d'un doigt la porté par une base B, il convient d'abaisser le levier 4a jusqu'à l'état représenté dans lequel la traverse T1 de la tige T est logée dans les crochets P1 et P2. Le maintien en prise de la traverse dans les crochets bloque le levier en position basse. Il est assuré par un ressort R qui tire la tige T vers l'anneau 4b et place le berceau T2 au dessus de cet anneau. L'approche du doigt la a pour effet de repousser la tige T à l'encontre de l'effet du ressort R et de dégager le levier des crochets de son maintien en position basse. Le doigt est alors à l'aplomb de l'anneau et la remontée du levier fait que le doigt se retrouve logé dans l'anneau. L'attelage est alors réalisé entre une base et un chariot ou entre la dernière base et le dernier chariot à la suite de celui-ci. Pour dételer, l'opérateur appuie du pied sur le levier qui vient s'encliqueter dans les crochets P1 et P2 et stationne en position basse comme dans la figure 3b.

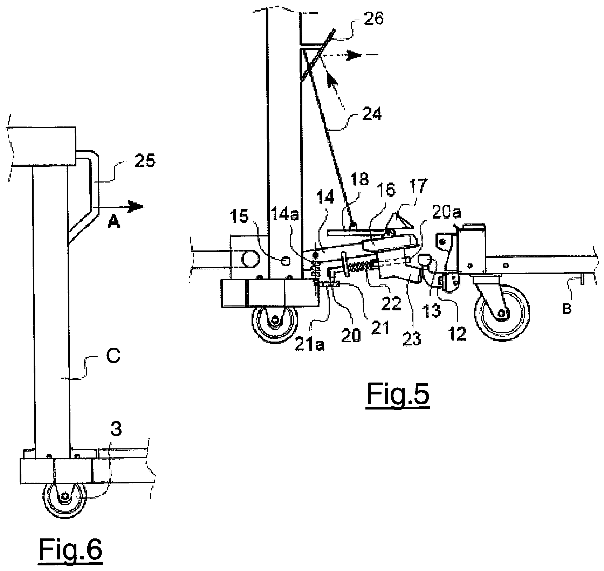

Aux figures 5 et 6, on retrouve certains des éléments déjà représentés aux figures précédentes, notamment une base roulante B et un chariot C.

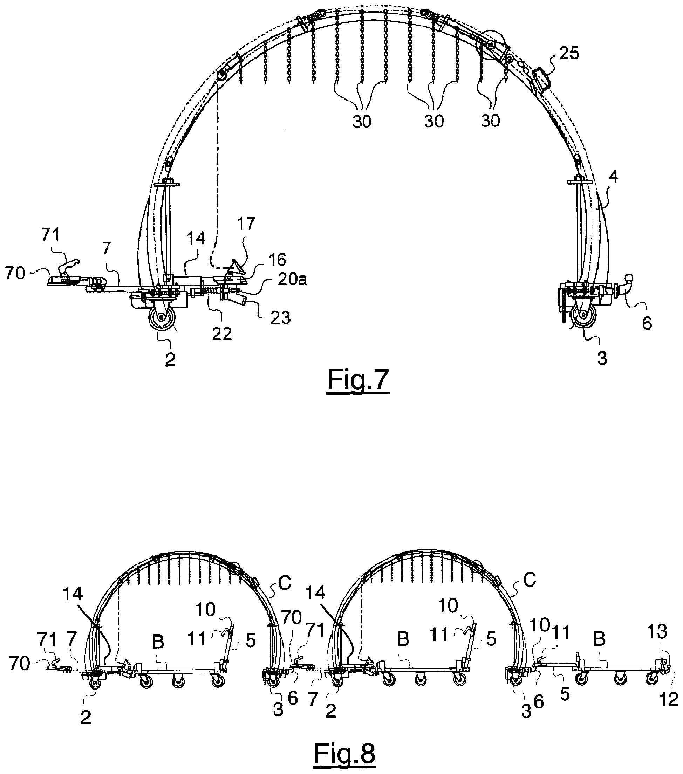

De manière connue, la base roulante a une première extrémité qui comporte un timon 5 pourvu à son extrémité d'un organe d'attelage en forme de boîtier 10 avec une poignée de verrouillage 11 (voir par exemple figure 8). La base roulante a une deuxième extrémité qui est équipée d'un crochet 12 à boule ou sphère 13 qui constituent une variante de réalisation de l'organe d'attelage fixe 1, la des figures 1 à 4.

On notera que la réalisation des figures 1 à 4 concerne des bases roulantes avec des mains courantes M aux lieu et place du timon 5

Le chariot C comporte une extrémité tractée pourvue d'un timon 7 ayant une extrémité libre pourvue d'un organe d'attelage en forme de boîtier 70 avec une poignée de verrouillage 71 et une extrémité opposée dite de traction pourvue d'un crochet 6 à boule. Cet agencement permet la réalisation de train de chariots C par la coopération des boîtiers 70 avec les crochets à boules 71 des chariots 4 (voir la figure 5). On notera que le boîtier 70 du premier chariot C du train peut être accroché à un crochet d'un véhicule tracteur tandis que le crochet à boule 6 du dernier chariot C du train peut être utilisé pour tracter directement une base roulante B (le boîtier 10 du timon 3 de ladite base roulante B étant alors engagé sur la boule du crochet à boule 6 dudit dernier chariot C).

Selon l'invention, le chariot C comporte, à son extrémité tractée (figure 5), pour atteler la base roulante, un mécanisme qui comporte les éléments suivants:
- un levier 14 articulé en 15 autour d'un axe horizontal sur le chariot et porteur, à son extrémité libre d'un boîtier 16 du genre du boîtier 10 mais dans lequel l'organe de verrouillage a été légèrement modifié pour d'une part, permettre son actionnement par le pied d'un opérateur, grâce à une pédale 17 et, d'autre part, présenter une bielle de déverrouillage 18 manoeuvrable vers le haut. Le levier 14 est en permanence rappelé vers le bas par un organe de rappel (ressort) 14a.
- une came 20 qui, dans un premier état (représenté), repose sur une plaque 21 solidaire du chariot et dans un second état, après une translation vers la gauche de la figure 5, tombe dans un orifice 21a de cette plaque, sous l'effet de rappel du ressort 14a. Cette came 20 est en effet portée par le levier 14 et peut coulisser sous ce dernier. Un ressort 22 tend à tirer la came 20 vers la droite de la figure, dans une position qui ne lui permet pas de tomber dans l'orifice 21a. La came 20 possède une extension 20a en direction de l'extrémité libre du levier 14 qui forme un poussoir à hauteur de la sphère 13 de sorte que, quand celle-ci est approchée de la came, elle la pousse sur une amplitude suffisante pour qu'elle tombe dans l'orifice 21 et que le levier 14 descende. Ainsi, le boîtier 16 vient-il coiffer la sphère 13 et l'opérateur, en manoeuvrant la pédale 17 avec le pied, verrouille l'attelage ainsi réalisé.
- un V de centrage 23 sous le poussoir 20a de la came 20 pour guider de manière certaine la sphère dans la zone où elle viendra immanquablement au contact du poussoir et à l'aplomb précis du boîtier qui la coiffe.
- un câble 24 qui court dans la structure du chariot depuis la bielle de déverrouillage 18 jusqu'à une poignée 25 de traction de ce câble suivant la flèche A (voir figure 3) située à l'autre extrémité du chariot qui en est l'extrémité arrière. Ainsi quand l'opérateur souhaite dételer la base roulante, il tire sur la poignée 25, ce qui a pour effet de soulever la bielle 18. Le déverrouillage de l'attelage est obtenu et le boîtier peut être séparé de la sphère vers le haut, à l'encontre du rappel du ressort 14a. La came sort de l'orifice et sous l'action du ressort 22 coulisse vers la droite de la figure pour placer le poussoir 20a dans sa position d'origine. Le câble 24 peut être remplacé par tout jeu de bielles et leviers adapté à transmettre le mouvement de la poignée 25 à la bielle 18.

On notera enfin la présence d'un miroir 26 en partie supérieure avant du chariot, à l'aplomb des moyens d'attelage, qui est tourné vers l'arrière pour permettre à l'opérateur, situé aussi à l'arrière de l'ensemble, de voir et contrôler le déroulement des opérations d'attelage et de dételage.

On comprend que les dispositions de l'invention constituent une amélioration importante de l'ergonomie pour l'opérateur (cariste) chargé de la manutention des bases roulantes vides ou pleines dans un atelier par exemple de montage de véhicules automobiles. En effet, cet opérateur est situé à l'arrière de la base et l'attelage est réalisé en poussant la base ce qui est plus aisé que de la tirer. De plus, au moment du dételage, il suffit de pousser latéralement l'extrémité arrière de la base qui tournera sur elle-même grâce à ses roues en losange et se désengagera aisément du V de centrage 23. L'opérateur peut aisément passer sous l'arceau que forme le chariot C pour dégager la base sans difficultés ni efforts.

On notera sur la figure 7 que des éléments souples, ici des chaînes 30, sont suspendus à l'arceau du chariot C pour matérialiser une zone de danger et empêcher ainsi qu'un opérateur passe sous l'arceau par inadvertance.

Les chaînes 30 ont une longueur telle que leur extrémité inférieure s'étende juste au-dessus de la base chargée.

Les chaînes 30 peuvent être fixées sous l'arceau, sur un flanc de l'arceau ou sur les deux flancs de celui-ci.

De préférence, ces chaînes 30 sont colorées et/ou contrastées pour se détacher visuellement de leur environnement. Les chaînes 30 sont par exemple bicolores.

Le chariot peut ne comprendre qu'un seul élément souple tel qu'un rideau. En outre, on notera que l'élément souple peut équiper tout type de chariot comportant un arceau indépendamment des moyens d'attelage de celui-ci.

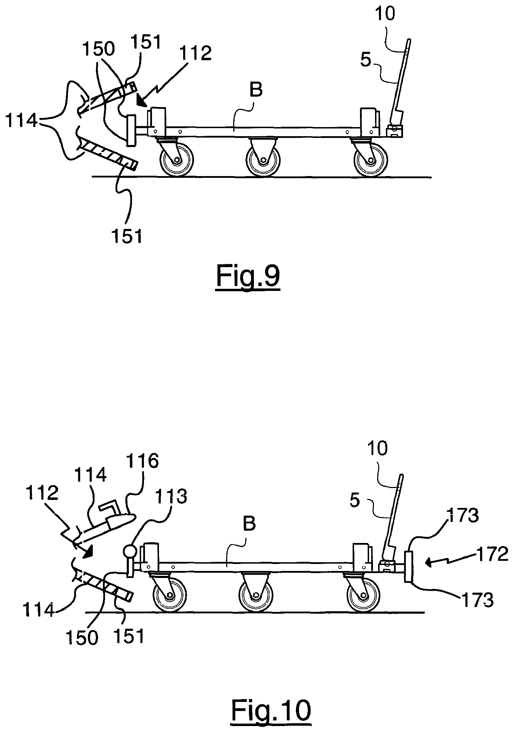

Dans la variante de la figure 9, la base roulante est identique à celle précédemment décrite sauf en ce que sa deuxième extrémité est équipé d'un crochet double 112 sous la forme d'un barreau vertical ayant une extrémité supérieure et une extrémité inférieure, toutes deux référencées 150 sur la figure 6, apte à être engagées dans un anneau 151 d'un timon 114. Pour être plus précis, l'extrémité supérieure 150 est destinée à être engagée dans un timon rappelé d'une position haute vers une position horizontale par la gravité comme le timon 3 ou par un ressort comme le levier 14. L'extrémité inférieure 150 est destinée à être engagée dans un timon rappelé d'une position basse vers une position horizontale par un ressort. De tels timons sont connus en eux-mêmes et peuvent être montés sur des chariots ou d'autres bases roulantes.

On comprend que la base roulante ainsi équipée peut être reliée à des timons différents augmentant ses possibilités d'emploi.

Dans la variante de la figure 10, la base roulante est équipée d'un crochet double 112, 172 respectivement à sa première extrémité et à sa deuxième extrémité.

Le crochet double 112 est identique au crochet double 112 décrit en relation avec la figure 6.

Le crochet double 172 est identique au crochet double 112 sauf en ce que son extrémité supérieure est équipée d'une boule 113 destinée à coopérer avec un boîtier 116 d'un timon 114 rappelé d'une position haute vers une position horizontale par la gravité comme le timon 5 ou par un ressort comme le levier 14.

Bien entendu, l'invention n'est pas limitée aux modes de réalisation décrits mais englobe toute variante couverte par la définition de l'invention figurant dans les revendications.

Ainsi, les moyens d'attelage peuvent avoir une autre structure que celle décrite.

Par ailleurs, bien qu'il soit particulièrement intéressant d'avoir des chariots C pourvus d'un crochet à boule 6 pouvant coopérer avec le boîtier 10 des bases roulantes pour accrocher une base roulante directement à l'extrémité arrière d'un train de chariots (ce qui permet de se passer d'un chariot), cet agencement n'est pas obligatoire. En outre, cette possibilité d'accrochage d'une base à l'arrière d'un chariot est indépendante du type des moyens d'attelage.

Les moyens d'attelage sont avantageusement démontables, que ce soit sur les bases ou les chariots, de manière à faciliter la maintenance, l'adaptation des chariots aux bases roulantes, la gestion des parcs de chariots et de bases roulantes.

De préférence, les bases roulantes sont agencées pour pouvoir également être tractées en train, sans chariots, par exemple pour ramener des bases vides à leur point de chargement. La partie arrière des bases roulantes est à cette fin équipée de moyens d'attelage complémentaires de ceux équipant la partie avant desdites bases roulantes.

## Revendications

1. Ensemble de manutention comprenant:
- une première pluralité (B1-B4) de bases (B) roulantes chacune équipée d'un moyen d'attelage fixe (1) à l'une de ses extrémités et
- une deuxième pluralité (C1-C3) de chariots (C) attelables entre eux pour former un train de chariots et pourvus d'essieux avant (2) et arrière (3) pivotant et asservis l'un à l'autre pour ce qui concerne leur pivotement, entre lesquels essieux l'une des bases (B) susdites peut être attelée au chariot par coopération dudit moyen d'attelage fixe (1) et d'un moyen d'attelage complémentaire (4) porté par le chariot (C),
**caractérisé en ce que** la première pluralité (B1-B4) comporte au moins un élément de plus que la deuxième pluralité (C1-C3), la base excédentaire (B4) étant attelable à l'arrière du et derrière le dernier chariot (C3) de la deuxième pluralité.

2. Ensemble de manutention selon la revendication 1, **caractérisé en ce que** le dernier chariot (C3) de la deuxième pluralité est équipé de moyens d'attelage (4) d'une base identiques à ceux qu'il comporte pour coopérer avec le moyen d'attelage fixe (1) susdit.

3. Ensemble de manutention selon la revendication 1 ou la revendication 2, **caractérisé en ce que** le moyen d'attelage complémentaire du moyen d'attelage fixe est porté par l'extrémité d'un levier (4a) monté mobile dans le chariot entre deux positions distantes verticalement, dont une première position dans laquelle le moyen d'attelage fixe coopère avec le moyen d'attelage complémentaire à l'attelage de la base au chariot et une seconde position de libération du moyen d'attelage fixe.

4. Ensemble de manutention selon la revendication 3, **caractérisé en ce que** la première position est la plus haute et la seconde la plus basse.

5. Ensemble de manutention selon la revendication 4, **caractérisé en ce que** le levier (4a) est basculant, est soumis à un organe de son rappel (E) vers sa position haute et est pourvu d'un verrou (T) de son maintien en position basse.

6. Ensemble de manutention selon la revendication 5, **caractérisé en ce que** le verrou possède un organe de déverrouillage (T2) actionné par le moyen d'attelage fixe (1) porté par la base, à l'approche de celle-ci au moment de l'attelage.

7. Ensemble de manutention selon la revendication 3 **caractérisé en ce que** le moyen d'attelage complémentaire (4) comporte un levier (14) monté basculant (15) dans le chariot (4) entre une position haute de libération du moyen d'attelage fixe et une position basse dans laquelle l'attelage de la base (B) au chariot (C) est réalisé.

8. Ensemble selon la revendication 7, **caractérisé en ce que** le moyen d'attelage fixe est un crochet (12) à sphère (13) d'attelage tandis que le moyen d'attelage complémentaire comporte un boîtier (16) pour coiffer le moyen d'attelage fixe.

9. Ensemble selon la revendication 7, **caractérisé en ce que** le levier (14) est maintenu en position haute, à l'encontre de l'effet d'un organe élastique de rappel (14a), par une came (20) coulissante par rapport au levier, escamotée par un poussoir (20a) dont l'extrémité est susceptible d'être déplacée par le moyen d'attelage fixe (13) lors de la dernière phase de son approche sous le moyen d'attelage complémentaire (16).

10. Ensemble selon la revendication 9, **caractérisé en ce que** le levier (14) est équipé d'un V (23) de guidage, situé sensiblement au niveau du moyen d'attelage fixe (13) quand le levier (14) est dans sa position haute.

11. Ensemble selon l'une des revendications 9 et 10, **caractérisé en ce que** le levier (14) est attaché à un élément de transmission (24) du mouvement d'une poignée (25) de dételage qui agit sur le moyen d'attelage complémentaire (16) à l'encontre de l'effet de l'organe de rappel (14a) du levier en position basse.

12. Ensemble selon la revendication 11, **caractérisé en ce que** l'élément de transmission est attelé au levier par l'intermédiaire d'un élément de verrouillage (18) du moyen d'attelage complémentaire sur le moyen d'attelage fixe équipé d'une pédale (17) de mise en oeuvre par le pied de l'opérateur.

13. Ensemble selon l'une des revendications 9 à 12, **caractérisé en ce que** le poussoir (20a) de la came (20) est soumis à l'effet d'un organe de rappel (22) qui tend à replacer ce poussoir dans sa position apte à être au contact avec le moyen d'attelage fixe (13) et à maintenir la came dans son état non escamoté.

14. Ensemble selon l'une des revendications précédentes, **caractérisé en ce que** le chariot (C) porte un miroir supérieur (26) à l'aplomb des moyens d'attelage (12, 13, 16) susdits et tourné vers l'arrière.

15. Ensemble selon la revendication 1, dans lequel au moins un élément souple (30) est suspendu à un arceau du chariot (C) et a une longueur telle que son extrémité inférieure s'étende juste au-dessus de la base chargée.

16. Ensemble selon la revendication 1, dans lequel le moyen d'attelage fixe comprend un crochet double (112, 172) ayant des extrémités inférieure et supérieure (150) qui sont agencées pour coopérer avec des leviers de types différents.

17. Ensemble selon la revendication 16, dans lequel l'extrémité supérieure du crochet double (172) est pourvue d'une boule d'attelage (113).

18. Ensemble selon la revendication 1, dans lequel la base roulante est équipée à son extrémité opposée à celle pourvue des moyens d'attelage fixes d'un timon basculant et d'un crochet double.

## Patentansprüche

1. Förderanordnung, umfassend:
- eine erste Vielzahl (B1-B4) von rollenden Basen (B), die jeweils an einem ihrer Enden mit einem ortsfesten Kupplungsmittel (1) versehen sind, und
- eine zweite Vielzahl (C1-C3) von Wagen (C), die aneinander kuppelbar sind, um einen Zug von Wagen zu bilden, und mit Vorderachsen (2) und Hinterachsen (3) versehen sind, die schwenkbar und zueinander folgegeregelt sind, was ihr Verschwenken angeht, wobei zwischen den Achsen eine der oben genannten Basen (B) an den Wagen durch Zusammenwirken des ortsfesten Kupplungsmittels (1) und eines von dem Wagen (C) getragenen komplementären Kupplungsmittels (4) angekuppelt werden kann,
**dadurch gekennzeichnet, dass** die erste Vielzahl (B1-B4) mindestens ein Element mehr als die zweite Vielzahl (C1-C3) umfasst, wobei die überzählige Basis (B4) hinten an den und hinter dem letzten Wagen (C3) der zweiten Vielzahl ankuppelbar ist.

2. Fördereinheit nach Anspruch 1, **dadurch gekennzeichnet, dass** der letzte Wagen (C3) der zweiten Vielzahl mit Kupplungsmitteln (4) zur Ankupplung einer Basis versehen ist, die identisch zu denen sind, die er zum Zusammenwirken mit dem oben genannten ortsfesten Kupplungsmittel (1) umfasst.

3. Fördereinheit nach Anspruch 1 oder Anspruch 2, **dadurch gekennzeichnet, dass** das zum ortsfesten Kupplungsmittel komplementäre Kupplungsmittel von dem Ende eines Hebels (4a) getragen wird, der in dem Wagen beweglich zwischen zwei vertikal beabstandeten Positionen gelagert ist, darunter eine erste Position, in der das ortsfeste Kupplungsmittel mit dem komplementären Kupplungsmittel zur Ankupplung der Basis an den Wagen zusammenwirkt, und eine zweite Freigabeposition zur Freigabe des ortsfesten Kupplungsmittels.

4. Förderanordnung nach Anspruch 3, **dadurch gekennzeichnet, dass** die erste Position die oberste und die zweite Position die unterste ist.

5. Förderanordnung nach Anspruch 4, **dadurch gekennzeichnet**, das der Hebel (4a) schwenkbar ist, einem Rückstellelement (E) zu seinem Rückstellen in seine obere Position ausgesetzt und mit einem Riegel (T) für sein Halten in der unteren Position versehen ist.

6. Förderanordnung nach Anspruch 5, **dadurch gekennzeichnet, dass** der Riegel ein Entriegelungselement (T2) besitzt, das von dem von der Basis getragenen ortsfesten Kupplungsmittel (1) beim Annähern der Basis zum Zeitpunkt der Ankupplung betätigt wird.

7. Förderanordnung nach Anspruch 3, **dadurch gekennzeichnet, dass** das komplementäre Kupplungsmittel (4) einen Hebel (14) umfasst, der in dem Wagen (4) schwenkbar (15) zwischen einer oberen Freigabeposition zur Freigabe des ortsfesten Kupplungsmittels und einer unteren Position gelagert ist, in der die Ankupplung der Basis (B) an den Wagen (C) erfolgt.

8. Förderanordnung nach Anspruch 7, **dadurch gekennzeichnet, dass** das ortsfeste Kupplungsmittel ein Haken (12) mit Kupplungskugel (13) ist, während das komplementäre Kupplungsmittel ein Gehäuse (16) zum Abdecken des ortsfesten Kupplungsmittels umfasst.

9. Anordnung nach Anspruch 7, **dadurch gekennzeichnet, dass** der Hebel (14) entgegen der Wirkung eines elastischen Rückstellelementes (14a) durch eine relativ zum Hebel verschiebbare Nocke (20) in der oberen Position gehalten wird, wobei die Nocke von einem Stößel (20a) ausgerückt wird, dessen Ende dazu geeignet ist, von dem ortsfesten Kupplungsmittel (13) während der letzten Phase seiner Annäherung unter das komplementäre Kupplungsmittel (16) verschoben zu werden.

10. Anordnung nach Anspruch 9, **dadurch gekennzeichnet, dass** der Hebel (14) mit einem Führungsprisma (23) versehen ist, das sich im Wesentlichen im Bereich des ortfesten Kupplungsmittels (13) befindet, wenn der Hebel (14) in seiner oberen Position ist.

11. Anordnung nach einem der Ansprüche 9 und 10, **dadurch gekennzeichnet, dass** der Hebel (14) an einem Übertragungselement (24) zur Übertragung der Bewegung eines Entkupplungsgriffes (25) angebracht ist, der auf das komplementäre Kupplungsmittel (16) entgegen der Wirkung des Rückstellelements (14a) zum Rückstellen des Hebels in die untere Position einwirkt.

12. Anordnung nach Anspruch 11, **dadurch gekennzeichnet, dass** das Übertragungselement an dem Hebel über ein Verriegelungselement (18) zum Verriegeln des komplementären Kupplungsmittels auf dem ortsfesten Kupplungsmittel angekuppelt ist, das mit einem Pedal (17) zur Betätigung durch den Fuß der Bedienperson versehen ist.

13. Anordnung nach einem der Ansprüche 9 bis 12, **dadurch gekennzeichnet, dass** der Stößel (20a) der Nocke (20) der Wirkung eines Rückstellelements (22) ausgesetzt ist, das dazu neigt, diesen Stößel in seine Position rückzustellen, in der er geeignet ist, mit dem ortsfesten Kupplungselement (13) in Kontakt zu sein und die Nocke in ihrem nicht ausgerückten Zustand zu halten.

14. Anordnung nach einem der vorhergehenden Ansprüche, **dadurch gekennzeichnet, dass** der Wagen (C) senkrecht über den oben genannten Kupplungsmitteln (12, 13, 16) einen oberen Spiegel (26) trägt, der nach hinten gerichtet ist.

15. Anordnung nach Anspruch 1, bei der mindestens ein flexibles Element (30) an einem Bogen des Wagens (4) aufgehängt ist und eine solche Länge hat, dass sich sein unteres Ende knapp über der beladenen Basis erstreckt.

16. Anordnung nach Anspruch 1, bei der das ortsfeste Kupplungsmittel einen Doppelhaken (112, 172) umfasst, der ein unteres und ein oberes Ende (150) hat, die so ausgebildet sind, dass sie mit Deichseln unterschiedlicher Art zusammenwirken.

17. Anordnung nach Anspruch 16, bei der das obere Ende des Doppelhakens (172) mit einer Kupplungskugel (113) versehen ist.

18. Anordnung nach Anspruch 1, bei der die rollende Basis an ihrem Ende, das dem mit den ortfesten Kupplungsmitteln versehenen entgegengesetzt ist, mit einer klappbaren Deichsel und einem Doppelhaken ausgestattet ist.

## Claims

1. Handling system comprising:
- a first plurality (B1-B4) of rolling bases (B) each including fixed coupling means (1) at one end, and
- a second plurality (C1-C3) of carts (C) adapted to be coupled to one another to form a train of carts and including a pivoting front axle (2) and a pivoting back axle (3) that are constrained to pivot together, between which axles one of said bases (B) can be coupled to the cart by cooperation of said fixed coupling means (1) and complementary coupling means (4) carried by the cart (C),
**characterized in that** the first plurality (B1-B4) comprises at least one more element than the second plurality (C1-C3), the extra base (B4) being adapted to be coupled to the rear of and behind the last cart (C3) of the second plurality.

2. Handling system according to claim 1, **characterized in that** the last cart (C3) of the second plurality includes base coupling means (4) identical to those that it includes in order to cooperate with said fixed coupling means (1).

3. Handling system according to claim 1 or claim 2, **characterized in that** the coupling means complementary to the fixed coupling means are carried by the end of a lever (4a) mounted in the cart to move between two vertically spaced positions, namely a first position in which the fixed coupling means cooperate with the complementary coupling means to couple the base to the cart and a second position for releasing the fixed coupling means.

4. Handling system according to claim 3, **characterized in that** the first position is the highest position and the second position is the lowest position.

5. Handling system according to claim 4, **characterized in that** the lever (4a) tilts, is acted on by a member (E) for returning it to its high position and includes a latch (T) to hold it in its low position.

6. Handling system according to claim 5, **characterized in that** the latch includes an unlatching member (T2) operated by the fixed coupling means (1) carried by the base on the approach of the latter at the time of coupling.

7. Handling system according to claim 3 **characterized in that** the complementary coupling means (4) include a lever (14) mounted in the cart (4) to pivot (15) between a high position for releasing the fixed coupling means and a low position in which the base (B) is coupled to the cart (C).

8. System according to claim 7, **characterized in that** the fixed coupling means consist of a hook (12) with a coupling ball (13) and the complementary coupling means include a housing (16) adapted to fit over the fixed coupling means.

9. System according to claim 7, **characterized in that** the lever (14) is held in the high position against the effect of a return spring member (14a) by a cam (20) adapted to slide relative to the lever and retracted by a plunger (20a) the end of which can be moved by the fixed coupling means (13) during the final phase of its approach under the complementary coupling means (16).

10. System according to claim 9, **characterized in that** the lever (14) includes a guide V (23) located substantially at the level of the fixed coupling means (13) when the lever (14) is in its high position.

11. System according to either one of claims 9 and 10, **characterized in that** the lever (14) is attached to an element (24) for transmitting the movement of an uncoupling handle (25) which acts on the complementary coupling means (16) against the effect of the member (14a) for urging the lever toward its low position.

12. System according to claim 11, **characterized in that** the transmission element is coupled to the lever via an element (18) for locking the complementary coupling means to the fixed coupling means including a pedal (17) adapted to be actuated by the foot of the operator.

13. System according to any one of claims 9 to 12, **characterized in that** the plunger (20a) of the cam (20) is acted on by a return member (22) tending to return the plunger to its position adapted to be in contact with the fixed coupling means (13) and to maintain the cam in its non-retracted state.

14. System according to any one of the preceding claims, **characterized in that** the cart (C) has a rearward-facing mirror (26) at the top in vertical alignment with said coupling means (12, 13, 16).

15. System according to claim 1, in which at least one flexible element (30) is suspended from a hoop of the cart (C) and has a length such that its lower end extends just above the base when loaded.

16. System according to claim 1, in which the fixed coupling means comprise a double hook (112, 172) having lower and upper ends (150) that are adapted to cooperate with different types of levers.

17. System according to claim 16, in which the upper end of the double hook (172) includes a coupling ball (113) .

18. System according to claim 1, in which the rolling base includes a tilting towbar and a double hook at its end opposite that including the fixed coupling means.
